# EUROPÄISCHE PATENTSCHRIFT

(11) **EP 0 719 198 B1**
(45) Veröffentlichungstag und Bekanntmachung des Hinweises auf die Patenterteilung: **21.05.1997**
(21) Anmeldenummer: 94927617.4
(22) Anmeldetag: 14.09.1994
(51) Int. Cl.: B23K 37/02, B23Q 7/04

(54) **BRENNERHALTER FÜR MECHANISIERTE ODER AUTOMATISIERTE LICHTBOGENSCHWEISS- ODER -SCHNEIDBRENNER, INSBESONDERE MASCHINEN- ODER ROBOTERBRENNER**
BURNER HOLDER FOR MECHANISED OR AUTOMATED ARC WELDING OR CUTTING TORCHES, ESPECIALLY MACHINE OR ROBOT BURNERS
SUPPORT POUR CHALUMEAUX DE DECOUPAGE OU DE SOUDAGE A L'ARC MECANISES OU AUTOMATISES, NOTAMMENT POUR CHALUMEAUX MONTES SUR MACHINES OU SUR ROBOTS

(30) Priorität: 14.09.1993 DE 4331095
(43) Veröffentlichungstag der Anmeldung: 03.07.1996
(73) Patentinhaber: ALEXANDER BINZEL GmbH & Co. KG, D-35418 Buseck (DE)
(72) Erfinder: SPERLING, Hermann, D-55296 Gau-Bischhofsheim (DE)
(74) Vertreter: Müller, Eckhard, Dr.
(86) Internationale Anmeldenummer: EP9403090
(87) Internationale Veröffentlichungsnummer: WO9507790

(56) Entgegenhaltungen:
- DD-A- 208 580
- DE-A- 3 545 503
- DE-A- 3 704 939
- DE-U- 9 206 138
- FR-A- 2 516 831
- US-A- 4 986 002

## Beschreibung

Die Erfindung bezieht sich auf ein System bestehend aus einen Brennerhalter für eine mechanisierte oder automatisierte Schweiß- oder -schneidvorrichtung, wie bspw. einen Maschinen-, Roboterbrenner o. dgl. Brenner, wobei der Brenner zwischen wenigstens zwei Spannbacken des Brennerhalters lösbar gehalten ist, welche den Brenner zumindest bereichsweise umfangsseitig umgreifen und synchron zwischen einer Öffnungs- und Schließstellung seitlich zueinander an einer Führung des Halters verschiebbar sind.

Beim mechanisierten Schweißen mittels eines sogenannten Maschinenbrenners wird der Brenner nicht von einem Schweißer gehandhabt, sondern ist an einer Vorrichtung gehalten, wobei die Relativbewegung zwischen Brenner und Werkstück maschinell durchgeführt wird. Dabei kann entweder das Werkstück feststehen und der Brenner sich bewegen, oder umgekehrt kann der Brenner fest montiert sein, während sich das Werkstück bewegt. Auch ist es bereits bekannt, den Brenner an einem Roboterarm anzuordnen. Zur Festlegung des Brenners dient ein an der Maschine, bspw. dem Führungsschlitten einer Schneidanlage, oder am Arm des Roboters angebrachter Halter, an welchem der Brenner entweder geklemmt oder mittels Schellen gehalten ist. Nachteilig bei dieser Halterung ist zum einen, daß das Festlegen des Brenners von Hand vorzunehmen ist, was eine ungenaue oder nur schwierig durchzuführende Ausrichtung des Brenners zur Folge hat. Zum anderen ist nach dem Auswechseln von Verschleißteilen des Brenners eine exakte Positionierung in der vorher eingenommenen Lage mit den bekannten Haltemitteln nur mit erheblichem Zeitaufwand möglich.

Ein System mit den eingangs genannten Merkmalen ist bereits aus der DE-U1 92 06 138 bekannt und betrifft einen Robotergreifer für Schweißwerkzeuge oder Schneidwerkzeuge, welche im direkten Stromdurchgang elektrisch erhitzt werden sollen. Der Robotergreifer weist zwei gegeneinander verschiebbare Greifbacken auf, deren Enden elektrisch von den metallischen Backen getrennt sind. Eine von dem Robotergreifer gehaltene elektrische Zuleitung mit Hin- und Rückleitung ist an Kontaktklemmen der beiden Enden anschließbar. Durch diese Maßnahme stehen die beiden Backenenden, die sich gegenüberliegen, unter Spannung. Die eine Backe ist mit zwei kegeligen Kontaktflächen, die andere Backe mit einer flachkeilförmigen Kontaktfläche versehen. Beim Zusammenfahren der Backen greifen diese Kontaktflächen in entsprechende Ausnehmungen der Werkstückhalterung ein und schaffen damit die elektrische Kontaktierung. Auch soll durch diese Maßnahmen ein hoher, die Haltekraft und den guten Stromübergang begünstigender Anpreßdruck erreicht werden.

Weiterhin ist aus der DE 37 04 939 A1 ein mechanischer Greifer mit zwei schwenkbar an einem ersten Führungsklotz gelagerten Zangenelementen mit gegenläufig geneigten Führungen bekannt, in die auf einem zweiten Führungsklotz mit festem Abstand angeordnete Führungselemente eingreifen. Der erste und zweite Führungsklotz sind auf an einem dritten Führungsklotz parallel angeordneten Führungsstangen gegeneinander verschieblich gelagert. Aufgrund dieser Maßnahmen soll erreicht werden, daß sowohl die Öffnungs- und Schließbewegung der Zangenelemente als auch die Hub- und Senkbewegung des Greifers von einem einzigen Antrieb bewirkt werden.

Hiervon ausgehend liegt der Erfindung die Aufgabe zugrunde, ein konstruktiv einfaches, robust aufgebautes System bestehend aus einem Brennerhalter und einem Brenner zu schaffen, bei dem nur geringe Reibungswiderstände vorhanden sind.

Zur Lösung der Aufgabe ist es nach der Erfindung vorgesehen, daß die Betätigung der Spannbacken mittels einer ggf. pneumatischen Kolben-Zylinder-Anordnung erfolgt, deren Kolbenstange auf vorzugsweise zwei an einer Führung des Halters senkrecht zur Verschieberichtung der Spannbacken verschiebbare Schiebestücke mit Kulissenführung einwirkt, in welche ein mit dem jeweils zugeordneten Spannbacken verbundenes Kulissenstück eingreift, wobei die Kulissenführung als in einem Winkel von etwa 45° zur Bewegungsrichtung des bzw. der Schiebestücke verlaufende Langlöcher ausgebildet ist, in welche das jeweilige, vorzugsweise rollengelagerte Kulissenstück eingreift.

Das erfindungsgemäße System zeichnet sich durch seine konstruktive Einfachheit und Robustheit im rauhen Schweißbetrieb aus. Die Verwendung von zwei Schiebestücken ermöglicht eine hohe Positioniergenauigkeit, wobei die Reibungswiderstände beim Öffnen und Schließen der Spannbacken durch das erfindungsgemäße System wesentlich reduziert werden.

Nach einer ersten Ausgestaltung der Erfindung wird ein besonders fester Halt des Brenners an der Schweiß- oder Schneidvorrichtung dadurch erreicht, daß die Spannbacken in Art von Greifarmen ausgebildet sind.

Weiterhin kann die Kolben-Zylinder-Anordnung als doppelwirkender Zylinder ausgebildet sein, wobei die Fluidbeaufschlagung für das Schließen der Spannbacken deckelseitig und für das Öffnen kolbenstangenseitig der Kolben-Zylinder-Anordnung erfolgt. Hierdurch ist in sicherheitstechnisch vorteilhafter Weise gewährleistet, daß die von der Kolben-Zylinder-Anordnung ausgehende Kraft beim Schließen der Spannbacken in jedem Fall größer als die Öffnungskraft ist.

Nach einer weiteren vorteilhaften Ausgestaltung der Erfindung weisen die Spannbacken mit an den Brenner angeordneten Gegenhaltemitteln zusammenwirkende Haltemittel zum selbsttätigen Zentrieren bzw. Justieren des Brenners beim Schließen der Spannbacken auf. Hierdurch ist eine hohe Positionier- und Wiederholgenauigkeit der Lage des Brenners an dem Halter nach einem Brennerwechsel oder nach dem Austausch von Verschleißteilen an dem Brenner erreicht, was sich unmittelbar in der Qualität der Schweißverbindung niederschlägt.

In konstruktiv einfacher Weise ist es hierbei vorgesehen, daß die Haltemittel als Rastmittel, vorzugsweise als federbelastete Bolzen, Stifte, kugelförmige Elemente o. dgl. gegenüber den Spannbacken vorstehende Vorsprünge ausgebildet sind, welche in wenigstens eine Vertiefung am Außenumfang des Brenners eingreifen.

Nach der Erfindung ist es auch vorgesehen, daß der Halter eine Aufnahme zum Einstecken eines an dem Brenner angebrachten Befestigungselementes aufweist. Hierdurch ist eine Vorjustierung des Brenners bzgl. des Halters erreicht. Gleichzeitig wirkt das Betätigungselement als Einführhilfe beim Ansetzen des Brenners an den Halter. Auch verhindert eine ggf. vorgesehene Rastverbindung Einstecken des mit dem Brenner verbundenen Betätigungselementes in die Aufnahme des Halters, daß beim Öffnen der Spannbacken der Brenner ungewollt vom Halter abfallen kann. Die Kupplungseinrichtung verhindert weiterhin, daß der Brenner verdreht in die Halterung eingesetzt wird. In Verbindung mit den Halte- und Gegenhaltemittel an den Spannbacken und den Brenner bedarf es nur noch eines Ansetzens des Brenners mit seinem Kupplungsstück in die Aufnahme des Halters, woraufhin die Halte- und Gegenhaltemittel unabhängig von der Stellung des Brenners, eine selbsttätige Ausrichtung und Positionierung des Brenners bei Schließen der Spannbacken bewirken. Selbstverständlich ist es aber auch möglich, daß der Brenner nur mit seinem Befestigungselement an dem Halter festgelegt ist.

Das Einsetzen und Verrasten des Brenners mit dem Halter gestaltet sich nach einem Vorschlag der Erfindung dann besonders einfach, wenn das in die Aufnahme des Halters einsteckbare Ende des Betätigungselementes bzw. des Bolzens einen nippelförmigen Fortsatz aufweist, wobei die Aufnahme am Halter eine auf den nippelförmigen Fortsatz abgestimmte Ausbildung besitzt.

Gemäß der Erfindung ist auch eine Sicherheitseinrichtung vorgesehen mit einem bei in Koppelstellung in der Aufnahme des Halters befindlichem Betätigungselemente des Brenners betätigt und in dieser Schaltstellung ein Schließen der Spannbacken zulassenden Schaltelement.

Vorteilhafterweise ist das Schaltelement dazu ausgebildet, einen Steuerschaltkreis für die Energieversorgung des Brenners bei Kuppelstellung des Betätigungselementes in der Aufnahme und in Schließstellung zu schließen und andernfalls zu unterbrechen. Bei nicht angesetztem oder nicht positioniertem Brenner ist dann bspw. die Stromquelle des Brenners abgeschaltet.

Für den über den Halter geführten Steuerschaltkreis befindlichem Spannbacken des Brenners ist eine Interlok-Schaltung vorgesehen mit an dem Brenner angeordneten Kontakten, welche bei in Kuppelstellung in der Aufnahme des Halters befindlichem Kupplungsstück des Brenners und in Schließstellung befindlichen Spannbacken in Wirkstellung mit an dem Halter angeordneten Gegenkontakten treten. Hierdurch ist erreicht, daß bei abgenommenem Brenner seine Energieversorgung unterbrochen ist. Bspw. im Falle eines Push-Pull-Brenners kann bei abgenommenem Brenner dann auch kein Schweißdraht zugeführt werden. Insgesamt ist daher gewährleistet, daß bei abgenommenem Brenner eine Verletzungsgefahr für den Bediener ausgeschlossen ist. Schaltungstechnisch läßt sich eine solche Interlok-Schaltung dadurch realisieren, daß der Schaltkreis des Steuerstromes für den Brenner über die Elektronik im Halter geschleift ist.

Schließlich erfolgt die Energieversorgung für den Halter bzw. für seine Betätigungselemente, wie bspw. für die Magnetventile der Kolben-Zylinder-Anordnung, über den Brenner bzw. über das von der Stromquelle zum Brenner führende Schlauchpaket. Somit bedarf es nur noch der Anbringung des Halters an der Führungsmaschine oder bspw. dem Roboterarm, ohne daß es für die Energieversorgung des Halters, bspw. für seine Spannbacken, einer Stromversorgung vom Roboter oder von der Führungsmaschine her bedarf. Hierdurch ist ein autarkes System geschaffen, ohne daß es besondere Vorkehrungen am Roboter oder dem Schweißautomaten vorgenommen werden müssen.

Auch zeichnet sich der erfindungsgemäße Halter durch einen kompakten Aufbau und geringes Gewicht aus und bietet durch seine spezielle Konstruktion die Möglichkeit des Anbaus einer Absaugeinrichtung oder einer Höheneinstelleinrichtung zwischen sich und der Führungsmaschine bzw. einem Roboterarm.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine mögliche Ausführungsform eines erfindungsgemäßen Brennerhalters in einer Querschnittsdarstellung,
- Figur 2: den Brennerhalter gemäß Figur 1 in einer Seitenansicht, teilweise geschnitten,

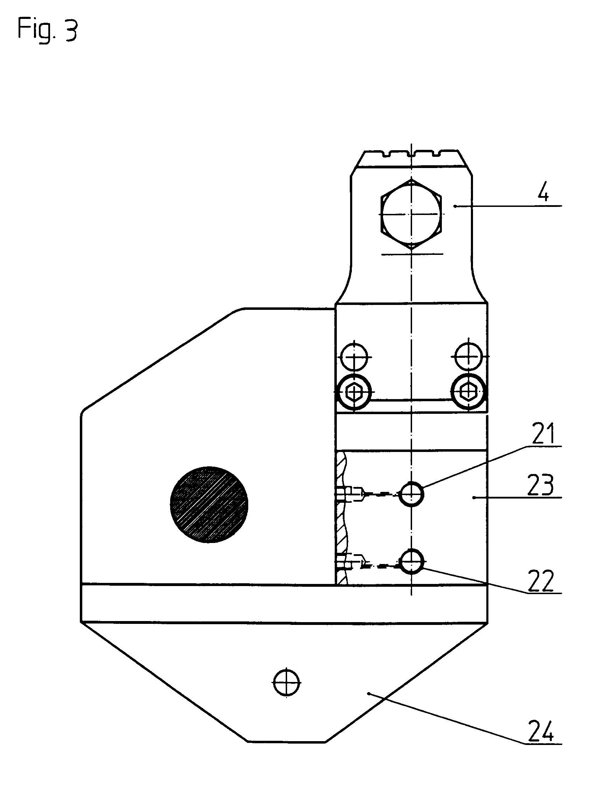

- Figur 3: eine weitere Seitenansicht des Brennerhalters gemäß Figur 1 und 2,
- Figur 4: eine weitere Ausführungsform eines erfindungsgemäßen Brennerhalters für eine manuelle Betätigung und
- Figur 5: den Brennerhalter gemäß Figur 1 mit einer Absaugeinrichtung.

Der Brennerhalter 1 weist einen Grundkörper 23 auf mit einem Montageflansch 24 zur Anbringung an einem Arm eines Schweiß- oder Schneidroboters oder an einer Führungseinrichtung einer Schweiß- oder Schneidmaschine.

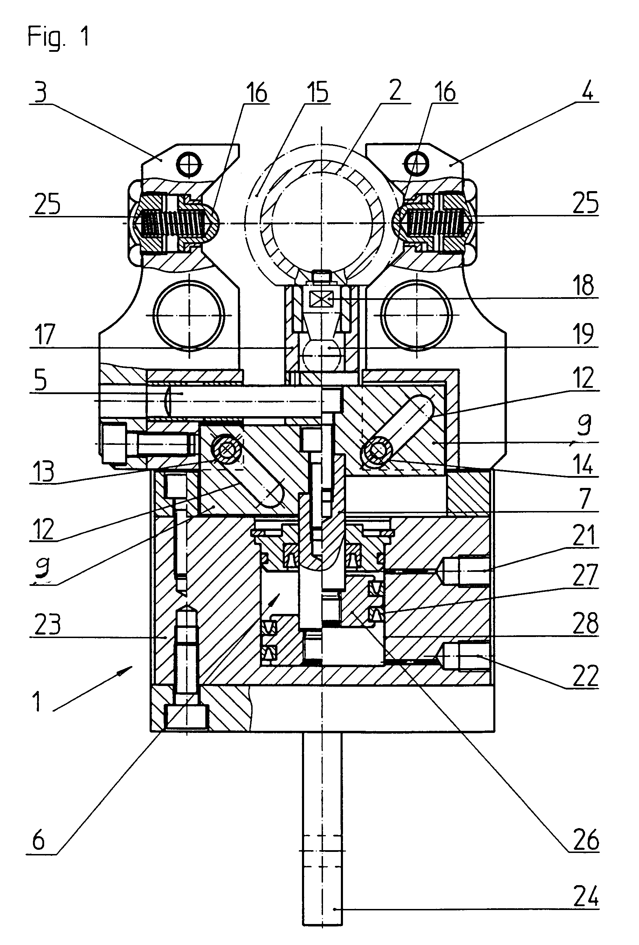

An dem dem Montageflansch 24 gegenüberliegenden Ende des Halters 1 befinden sich zwei Spannbacken 3, 4, welche an einer Führung 5 seitlich zwischen einer Öffnungs- und Schließstellung verschiebbar sind. In Figur 1 ist der Spannbacken 3 in Öffnungsstellung gezeigt, während sich der Spannbacken 4 in Schließstellung befindet. In der Schließstellung ist der mit 2 bezeichnete Brenner umfangsseitig von den als Greifarmen ausgebildeten Spannbacken 3, 4 umgriffen. Auf der Anlagenseite der Spannbacken 3, 4 befindet sich ein nach innen vorstehendes Rastelement 16, welches beim Schließen der Spannbacken 3, 4 in eine Vertiefung 15 am Außenumfang des Brenners 2 eingreift. Hierdurch ist ein selbsttätiges Zentrieren und Justieren des Brenners 2 in der vorgegebenen Lage am Halter erreicht. Die Rastmittel 16 sind als halbkugelförmige Elemente ausgebildet und durch Druckfedern 25 in Stellung gehalten.

Die Betätigung der Spannbacken 3, 4 erfolgt über eine im Grundkörper 23 des Halters 1 angeordnete Kolben-Zylinder-Anordnung 6, deren Kolbenstange 7 auf ein in einer Führung des Grundkörpers 23 senkrecht zu der Verschieberichtung der Spannbacken 3, 4 verschiebbares Schiebestücke 9 einwirkt. An dem Schiebestück 9 befinden sich in einem Winkel von etwa 45° bzgl. ihrer Bewegungsrichtung verlaufende Langlöcher 11, 12, welche mit dem jeweiligen Spannbacken 3, 4 über einen (nicht dargestellten) Arm oder eine Platte verbunden sind.

Die Wirkungsweise dieses Parallelgreifers mit Kulissenführung ist derart, daß ausgehend von in Öffnungsstellung befindlichen Spannbacken 3, 4, entsprechend der Stellung des Spannbackens 3 gemäß Figur 1, über den Anschluß 22 die Kolben-Zylinder-Anordnung 6 von ihrer Deckelseite her bzw. der Kolben 26 mit Druckfluid beaufschlagt wird. Dadurch gleitet der Kolben 26 mit seinen Ringdichtungen 27 an der im Grundkörper 23 gebildeten Zylinderwandung 28 in Richtung der Spannbacken 3, 4. Dabei wird das Schiebestück 9 durch die Kolbenstange 7 ebenfalls in Richtung der Spannbacken 3, 4 geschoben, wobei die rollengelagerten Kulissenstücke 13, 14 in den Langlöchern 11, 12 des Schiebestückes 9 eine Relativbewegung ausführen, so daß die Spannbacken 3, 4 synchron von der Öffnungsstellung in die Schließstellung unter Umgreifen des Brenners 2 aufeinander zugeschoben werden. Zum Verschieben der Spannbacken 3, 4 von der Schließ- in die Öffnungsstellung erfolgt eine Druckmittelbeaufschlagung über den Anschluß 21, so daß der Kolben 26, die Kolbenstange 7 und das Schiebestück 9 zurückgezogen werden, wodurch sich die Spannbacken 3, 4 nach außen in ihre Öffnungsstellung bewegen.

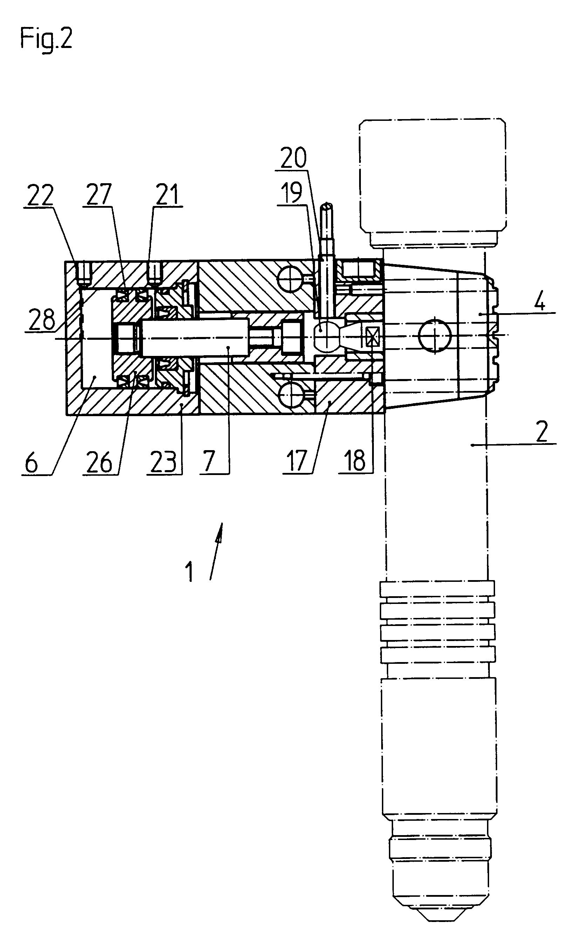

Wie aus Abbildung 1 und 2 zu entnehmen, befindet sich zwischen den Spannbacken 3, 4 eine Aufnahme 17, in welche ein mit dem Brenner 2 verbundenes Kupplungsstück 18 einsteckbar und verrastbar ist. Dabei ist das einsteckbare Ende des Kupplungsstückes 18 als nippelförmiger Fortsatz 19 ausgebildet, wobei die Aufnahme 17 eine an diesen nippelförmigen Fortsatz 19 angepaßte Kontur zum Einstecken und Verrasten des Kupplungsstückes 18 aufweist. Hierdurch ist eine Vorjustierung des Brenners 2 an dem Halter 1 erreicht, bevor die Spannbacken 3, 4 in Schließstellung gebracht werden. Gleichzeitig wirkt das Kupplungsstück 18 mit nippelförmigem Fortsatz 19 als Einführhilfe beim Ansetzen des Brenners 2 an den Halter 1. Auch ist verhindert, daß beim Öffnen der Spannbacken 3, 4 der Brenner 2 ungewollt von dem Halter 1 abfallen kann.

Wie weiterhin den Figur 2 zu entnehmen, wird durch das Kupplungsstück 18 bzw. durch seinen nippelförmigen Fortsatz 19 ein Schaltelement 20 betätigt, welches einer Sicherheitseinrichtung zugeordnet ist. Diese Sicherheitseinrichtung bewirkt, daß erst bei betätigtem Schaltelement 20 eine Energieversorgung des Brenners 2 und ein Schließen der Spannbacken 3, 4 ermöglicht ist. Das Schaltelement kann bspw. ein mechanisches, optisches oder elektrisches Schaltelement sein, bspw. ein induktiver Näherungsschalter. Für den Stromkreis der Energieversorgung des Brenners 2 ist eine (ebenfalls nicht dargestellte) Interlok-Schaltung vorgesehen, mit am Brenner 2 angeordneten Kontakten, welche bei in Kuppelstellung befindlichem Kupplungsstück 18 und in Schließstellung befindlichen Spannbacken 3, 4 in der Aufnahme 17 mit entsprechenden Gegenkontakten am Halter 1 in Wirkstellung treten. Erst wenn die Kontakte und Gegenkontakte betätigt sind, ist der Steuerkreis geschlossen, so daß die Stromquelle für den Brenner 2 aktiviert ist. Hierdurch ist gewährleistet, daß bei abgenommenem Brenner 2 eine Verletzungsgefahr für den Bediener ausgeschlossen ist. Schaltungstechnisch läßt sich der Steuerschaltkreis für den Brenner 2 derart ausführen, daß die Stromführung für den Steuerkreis über eine Elektronik im Halter 1 geschleift ist.

Desweiteren erfolgt die Energieversorgung für den Halter 1 über das (nicht dargestellte) Schlauchpaket des Brenners 2. Hierdurch bedarf es keiner Einrichtungen oder Umrüstungen an dem Roboter oder einer Führungseinrichtung des Schweiß- oder Schneidautomaten.

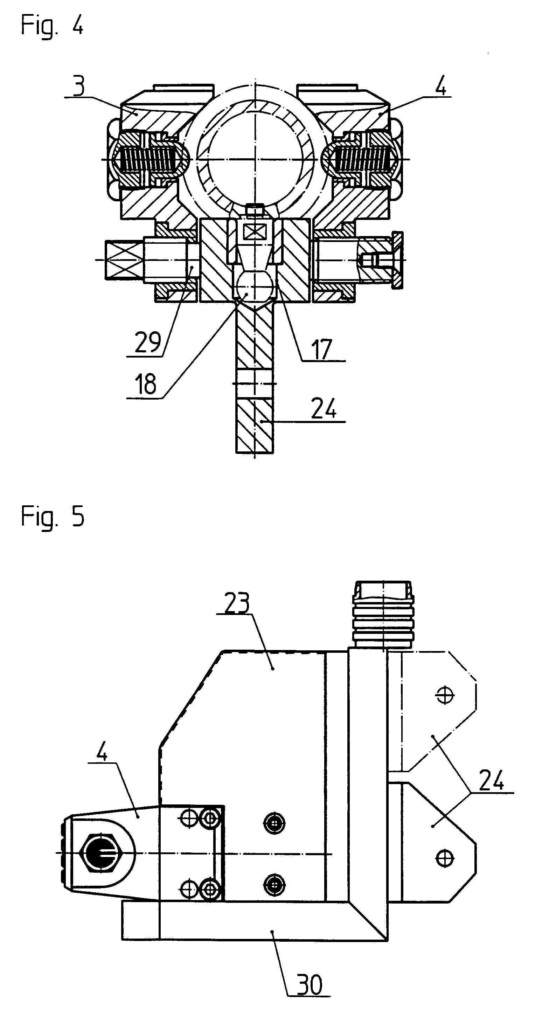

Selbstverständlich ist es auch möglich, anstelle eines pneumatischen, hydraulischen oder auch elektrischen Antriebes der Spannbacken 3, 4 eine mechanische Betätigung vorzusehen. Hierzu ist, wie insbesondere aus Figur 4 zu ersehen, eine durch die Spannbacken 3, 4 gehende Spindel 29 mit auf der einen Seite angeordnetem links und auf der anderen Seite angeordneten Rechtsgewinde vorgesehen. Die Spindel 29 ist an dem Halter 1 im Bereich der Aufnahme 17 für das Betätigungselement 18 gelagert. Durch Ansetzen eines Werkzeuges, bspw. Steckschlüssels auf einer Stirnseite der Spindel 29 lassen sich die Spannbacken 3, 4 in Öffnungs- und Schließstellung bewegen.

Wie aus Figur 5 zu entnehmen, bietet die spezielle Form des Halters 1 die Möglichkeit Anbauteile, wie bspw. eine Absaugeinrichtung 30 und/oder Höhenverstelleinrichtung 6 in Sandwich-Bauweise zwischen dem Grundkörper 23 des Halters 1 und dem Montageflansch 24 anzuordnen. Durch die Sandwich-Bauweise ist eine besonders kompakte Bauform erreicht. Auch ist die Möglichkeit gegeben, entsprechend dem jeweiligen Bedarf das entsprechende Anbauteil auszuwählen oder ggf. mehrere Anbauteile im Baukastensystem hintereinander zwischen Grundkörper 23 und Montageflansch 24 vorzusehen.

### Bezugszeichenliste

- 1: - Halter
- 2: - Brenner
- 3: - Spannbacken
- 4: - Spannbacken
- 5: - Führung
- 6: - Kolben-Zylinder-Anordnung
- 7: - Kolbenstange
- 9: - Schiebestück
- 11: - Kulissenführung, Langloch
- 12: - Kulissenführung, Langloch
- 13: - Kulissenstück
- 14: - Kulissenstück
- 15: - Gegenrastmittel, Vertiefung
- 16: - Rastmittel
- 17: - Aufnahme
- 18: - Kupplungsstück
- 19: - nippelförmiger Fortsatz
- 20: - Schaltelement
- 21: - Anschluß
- 22: - Anschluß
- 23: - Grundkörper
- 24: - Montageflansch
- 25: - Druckfeder
- 26: - Kolben
- 27: - Ringdichtung
- 28: - Zylinderwandung
- 29: - Gewindespindel
- 30: - Absaugeinrichtung

## Patentansprüche

1. System bestehend aus einem Brenner und einem Brennerhalter für eine mechanisierte oder automatisierte Schweiß- oder Schneidvorrichtung, wie bspw. einen Maschinen-, Roboterbrenner o. dgl. Brenner (2), wobei der Brenner (2) zwischen wenigstens zwei Spannbacken (3, 4) des Brennerhalters (1) lösbar gehalten ist, welche den Brenner (2) zumindest bereichsweise umfangsseitig umgreifen und synchron zwischen einer Öffnungs- und Schließstellung seitlich zueinander an einer Führung (5) des Halters (1) verschiebbar sind, dadurch gekennzeichnet, daß die Betätigung der Spannbacken (3, 4) mittels einer ggf. pneumatischen Kolben-Zylinder-Anordnung (6) erfolgt, deren Kolbenstange (7) auf ein in einer Führung des Halters (1) senkrecht zur Verschieberichtung der Spannbacken (3, 4) verschiebbares Schiebestück (9) mit jeweils einer Kulissenführung (11, 12) einwirkt, in welche ein mit dem jeweils zugeordneten Spannbacken (3, 4) verbundenes Kulissenstück (13, 14) eingreift, wobei die Kulissenführung (11, 12) als in einem Winkel von 45° zur Bewegungsrichtung des Schiebestückes (9) verlaufende Langlöcher ausgebildet ist, in welche das jeweilige, vorzugsweise rollengelagerte Kulissenstück (13, 14) eingreift.

2. System nach Anspruch 1, dadurch gekennzeichnet, daß die Spannbacken (3, 4) in Art von Greiferarmen ausgebildet sind.

3. System nach Anspruch 1 oder 2, dadurch gekennzeichnet, daß die Kolben-Zylinder-Anordnung (6) doppeltwirkend ausgebildet ist, wobei die Fluidbeaufschlagung für das Schließen der Spannbacken (3, 4) deckelseitig und für das Öffnen kolbenstangenseitig der Kolben-Zylinder-Anordnung (6) erfolgt.

4. System nach einem oder mehreren der vorhergehenden Ansprüche, dadurch gekennzeichnet, daß die Spannbacken (3, 4) mit an dem Brenner (2) angeordneten Gegenhaltemitteln (15) zusammenwirkende Haltemittel (16) zum selbsttätigen Zentrieren bzw. Justieren des Brenners (2) beim Schließen der Spannbacken (3, 4) aufweisen.

5. System nach Anspruch 4, dadurch gekennzeichnet, daß die Haltemittel (16) als Rastmittel, vorzugsweise federbelastete Bolzen, Stifte, kugelförmige Elemente o. dgl. gegenüber den Spannbacken (3, 4) vorstehende Vorsprünge ausgebildet sind, welche in wenigstens eine Vertiefung (15) am Außenumfang des Brenners (2) eingreifen.

6. System, nach einem oder mehreren der vorhergehenden Ansprüche, dadurch gekennzeichnet, daß der Halter eine Aufnahme (17) zum Einstecken eines an dem Brenner (2) angebrachten Befestigungselementes (18) aufweist.

7. System nach Anspruch 6, dadurch gekennzeichnet, daß das Befestigungselement (10) in Art eines Bolzens ausgebildet ist.

8. System nach Anspruch 6 oder 7, dadurch gekennzeichnet, daß das in die Aufnahme (17) des Halters (1) einsteckbare Ende des Bolzens (18) einen nippelförmigen Fortsatz (19) aufweist.

9. System nach einem der Ansprüche 6 bis 8, dadurch gekennzeichnet, daß das Betätigungselement in der Aufnahme (17) mittels einer Rastverbindung gehalten ist.

10. System nach Anspruch 6 bis 9, dadurch gekennzeichnet, daß eine Sicherheitseinrichtung vorgesehen ist mit einem bei in Koppelstellung in der Aufnahme (17) befindlichem Bolzen (18) betätigten und in dieser Schaltstellung ein Schließen der Spannbacken (3, 4) zulassenden Schaltelement (20).

11. System nach Anspruch 10, dadurch gekennzeichnet, daß das Schaltelement (20) die über den Halter (1) geführte Stromversorgung für den Brenner (2) schließt bzw. unterbricht.

12. System nach einem der Ansprüche 6 bis 11, dadurch gekennzeichnet, daß die über den Halter (1) geführte Stromversorgung für den Brenner (2) eine Interlok-Schaltung aufweist mit an dem Brenner (2) angeordneten Kontaktelementen, welche in Koppelstellung des Bolzens (18) des Brenners (1) in der Aufnahme (17) des Halters (1) in Wirkstellung mit an dem Halter (1) vorgesehenen Gegenkontakten treten.

13. System nach einem oder mehreren der vorhergehenden Ansprüche, dadurch gekennzeichnet, daß die Energieversorgung für den Halter (1) über den Brenner (2) erfolgt.

14. System nach einem oder mehreren der vorhergehenden Ansprüche, dadurch gekennzeichnet, daß der Halter (1) einen Grundkörper (23) aufweist, an welchem Anbauteile, wie bspw. eine Absaugeinrichtung und/oder eine Höhenverstelleinrichtung, festlegbar sind.

15. System nach Anspruch 14, dadurch gekennzeichnet, daß die Anbauteile zwischen einem Montageflansch (24) und dem Gehäuse bzw. dem Grundkörper (23) verschraubt sind.

16. System nach Anspruch 1 bis 14, dadurch gekennzeichnet, daß der Brenner ein Lichtbogenschneid- oder -schweißbrenner ist.

## Claims

1. System consisting of a burner and a burner holder for a mechanised or automated welding or cutting device such as for example a machine burner or robot burner or the like burner (2), wherein the burner (2) is retained to be releasable between at least two clamping cheeks (3, 4) of the burner holder (1), which encompass the burner (2) circumferentially at least in regions and are displaceable one laterally relative to the other at a guide (5) of the holder (1) and sychronously between an opening and a closing position, characterised thereby, that the actuation of the clamping cheeks (3, 4) takes place by means of a piston-cylinder arrangement (6), which is in a given case pneumatic and the piston rod (7) of which acts on a sliding member (9), which is displaceable perpendicularly to the direction of displacement of the clamping cheeks (3, 4) in a guide of the holder (1), by a respective slide gate guide (11, 12), into which a slide gate member (13, 14) connected with the respectively associated clamping cheek (3, 4) engages, wherein the slide gate guide (11, 12) is constructed as elongate holes, which extend at an angle of 45° to the direction of movement of the sliding member (9) and into which the respective slide gate member (13, 14) engages, preferably being borne as rollers.

2. System according to claim 1, characterised thereby, that the clamping cheeks (3, 4) are constructed in the form of gripper arms.

3. System according to claim 1 or 2, characterised thereby, that the piston-cylinder arrangement (6) is constructed to be double-acting, wherein the charging with fluid takes place at the cover end for the closing of the clamping cheeks (3, 4) and at the piston rod end of the piston-cylnder arrangement (6) for the opening.

4. System according to one or more of the preceding claims, characterised thereby, that the clamping cheeks (3, 4) comprise retaining means (16), which co-operate with counterretaining means (15) arranged at the burner (2), for the automatic centring or adjustment of the burner (2) on the closing of the clamping cheeks (3, 4).

5. System according to claim 4, characterised thereby, that the retaining means (16) are constructed as detent means, preferably spring-loaded bolts, pins, spherical elements or the like projections which protrude relative to the clamping cheeks (3, 4) and engage into at least one depression (15) at the outer circumference of the burner (2).

6. System according to one or more of the preceding claims, characterised thereby, that the holder comprises a receptacle (17) for the plugging-in of a fastening element (18) mounted at the burner (2).

7. System according to claim 6, characterised thereby, that the fastening element (10) is formed in the manner of a bolt.

8. System according to claim 6 or 7, characterised thereby, that that end of the bolt (18), which is pluggable into the receptacle (17) of the holder (1), comprises a nipple-shaped prolongation (19).

9. System according to one of the claims 6 to 8, characterised thereby, that the actuating element is retained in the receptacle (17) by means of a detent connection.

10. System according to claim 6 to 9, characterised thereby, that a safety equipment is provided with a switching element (20), which is actuated when the bolt (18), which in the coupling position is disposed in the receptacle (17) and in this switch position permits a closing of the clamping cheeks (3, 4).

11. System according to claim 10, characterised thereby, that the switching element (20) closes or interrupts the current supply, which is conducted by way of the holder (1), for the burner (2).

12. System according to one of the claims 6 to 11, characterised thereby, that the current supply, which is conducted by way of the holder (1), for the burner (2) comprises an interlock circuit with contact elements which are arranged at the burner (2) and, in the coupling position of the bolt (18) of the burner (2) in the receptacle (17) of the holder (1), enter into operative setting with the countercontacts provided at the holder (1).

13. System according to one or more of the preceding claims, characterised thereby, that the energy supply for the holder (1) takes place by way of the burner (2).

14. System according to one or more of the preceding claims, characterised thereby, that the holder (1) comprises a basic body (23), at which attachment parts, such as for example a suction equipment and/or a vertically adjusting equipment, can be fixed.

15. System according to claim 14, characterised thereby, that the attachment parts are screw-fastened between a mounting flange (24) and the housing or the basic body (23).

16. System according to claim 1 to 14, characterised thereby, that the burner is an arc-cutting burner or an arc-welding burner.

## Revendications

1. Système constitué par un chalumeau et un porte-chalumeau pour un dispositif de soudage ou de coupe mécanisé ou automatisé, comme par exemple un chalumeau d'une machine, un chalumeau de robot ou un chalumeau analogue (2), le chalumeau (2) étant retenu de façon amovible entre au moins deux mâchoires de serrage (3,4) du porte-chalumeau (1), qui enserrent le brûleur (2) au moins par endroits sur sa périphérie et sont déplaçables de façon synchrone latéralement l'une par rapport à l'autre entre une position ouverte et une position fermée sur un guide (5) du support (1), caractérisé en ce que l'actionnement des mâchoires de serrage (3,4) s'effectue à l'aide d'un dispositif à piston et cylindre (6) éventuellement pneumatique, dont la tige de piston (7) agit sur un coulisseau (9) déplaçable dans un guide du support (1) perpendiculairement à la direction de déplacement des mâchoires de serrage (3,4) et comportant respectivement un guide de coulisse (11,12), dans lequel s'engage un élément de coulisse (13,14) qui est relié aux mâchoires de serrage (3,4) respectivement associées, le guide de coulisse (11,12) étant agencé sous la forme d'un trou allongé, qui fait un angle de 45° par rapport à la direction de déplacement du coulisseau (9) et dans lequel s'engage l'élément de coulisse respectif (13,14) qui est de préférence supportée par des galets.

2. Système selon la revendication 1, caractérisé en ce que les mâchoires de serrage (3,4) sont agencées à la manière de bras de préhension.

3. Système selon la revendication 1 ou 2, caractérisé en ce que le dispositif à piston et cylindre est à double effet, l'application du fluide s'effectuant côté couvercle pour la fermeture des mâchoires de serrage (3,4) et côté tige de piston du dispositif à piston et cylindre (6) pour l'ouverture.

4. Porte-chalumeau selon une ou plusieurs des revendications précédentes, caractérisé en ce que les mâchoires de serrage (3,4) possèdent des moyens de retenue (16), qui coopèrent avec des moyens antagonistes de retenue (15) disposés sur le chalumeau (2), pour centrer et ajuster automatiquement le chalumeau (2) lors de la fermeture des mâchoires de serrage (3,4).

5. Système selon la revendication 4, caractérisé en ce que les moyens de retenue (16) sont agencés sous la forme de moyens d'encliquetage, de préférence des goujons, des broches et des éléments en forme de billes chargées par un ressort, ou des parties saillantes qui font saillie par rapport aux mâchoires de serrage (3,4) et qui s'engagent dans au moins un renfoncement (15) aménagé dans la périphérie extérieure du chalumeau (2).

6. Système selon une ou plusieurs des revendications précédentes, caractérisé en ce que le support comporte un logement (17) pour l'enfichage d'un élément de fixation (18) disposé sur le chalumeau (2).

7. Système selon la revendication 6, caractérisé en ce que l'élément de fixation (10) est agencé en forme de goujon.

8. Système selon la revendication 6 ou 7, caractérisé en ce que l'extrémité du goujon (18) , qui peut être enfichée dans le logement (17) du porte-chalumeau (1), possède un prolongement (19) formant raccord (19).

9. Système selon l'une des revendications 6 à 8, caractérisé en ce que l'élément d'actionnement est retenu dans le logement (17) au moyen d'une liaison à encliquetage.

10. Système selon les revendications 6 à 9, caractérisé en ce qu'il est prévu un dispositif de sécurité comportant un élément de commutation (20) qui est actionné dans le cas où le goujon (18) est situé dans la position de couplage dans le logement (17), et dans cette position de commutation, autorise une fermeture des mâchoires de serrage (3,4).

11. Système selon la revendication 10, caractérisé en ce que l'élément de commutation (20) ferme ou interrompt l'alimentation en courant du chalumeau (2), appliquée par l'intermédiaire du porte-chalumeau (1).

12. Système selon l'une des revendications 6 à 9, caractérisé en ce que l'alimentation en courant transmise par l'intermédiaire du porte-chalumeau (1) pour le chalumeau (2) possède un circuit de verrouillage comportant des éléments de contact qui sont disposés sur le chalumeau (2) et qui, lorsque le goujon (18) du chalumeau (1) est dans la position d'accouplement dans le logement (17) du porte-chalumeau (1), coopère avec des contacts antagonistes prévus sur le porte-chalumeau (1).

13. Système selon une ou plusieurs des revendications précédentes, caractérisé en ce que l'alimentation en énergie pour le porte-chalumeau (1) s'effectue par l'intermédiaire du chalumeau (2).

14. Système selon une ou plusieurs des revendications précédentes, caractérisé en ce que le porte-chalumeau (1) possède un corps de base (23), sur lequel peuvent être fixées des parties rapportées, comme par exemple un dispositif d'aspiration et/ou un dispositif de réglage en hauteur.

15. Système selon la revendication 14, caractérisé en ce que les pièces rapportées sont vissées entre une bride de montage (24) et le boîtier ou le corps de base (23).

16. Système selon les revendications 1 à 14, caractérisé en ce que le chalumeau est un chalumeau de coupage ou de soudage à arc.
